Europäisches Patentamt

European Patent Office

Office européen des brevets

(19)

(11) Veröffentlichungsnummer: **0 013 418**
**B1**

(12) **EUROPÄISCHE PATENTSCHRIFT**

(45) Veröffentlichungstag der Patentschrift: **22.06.83**

(51) Int. Cl.³: **B 42 D 15/02**

(21) Anmeldenummer: **79105348.1**

(22) Anmeldetag: **21.12.79**

(54) Identifikationskarte und Verfahren zu ihrer Herstellung.

(30) Priorität: **30.12.78 DE 2856833**

(43) Veröffentlichungstag der Anmeldung:
**23.07.80 Patentblatt 80/15**

(45) Bekanntmachung des Hinweises auf die Patenterteilung:
**22.06.83 Patentblatt 83/25**

(84) Benannte Vertragsstaaten:
**BE DE FR GB IT NL**

(56) Entgegenhaltungen:
**EP - A - 0 011 684**
**DE - A - 2 163 943**
**DE - A - 2 308 876**
**FR - A - 961 181**
**FR - A - 1 347 240**
**FR - A - 2 114 705**
**FR - A - 2 117 055**
**US - A - 3 614 839**

(73) Patentinhaber: **HOECHST AKTIENGESELLSCHAFT**
**Postfach 80 03 20**
**D-6230 Frankfurt/Main 80 (DE)**

(72) Erfinder: **Moraw, Roland, Dr.**
**Buchenweg 4**
**D-6200 Wiesbaden-Naurod (DE)**
Erfinder: **Schädlich, Renate**
**Erbsenacker 13**
**D-6200 Wiesbaden-Naurod (DE)**

Courier Press, Leamington Spa, England.

Identifikationskarte und Verfahren zu ihrer Herstellung

Die Erfindung betrifft eine Identifikationskarte aus zumindest einer äußeren transparenten thermoplastischen Abdeckschicht auf der Basis von Polyvinylchlorid und einem thermoplastischen Kartenkern, mit der identifizierung des karteninhabers dienenden Informationen an geeigneter Stelle auf einer oder mehreren Schichten und mit zusätzlichen Sicherungsmerkmalen, wie Guilloche-Figuren, gegen Fälschungen, und ein Verfahren zur Herstellung der Identifikationskarte.

Derartige Karten werden als Personalausweise, Scheckkarten, Kreditkarten, Zahlkarten, Paßkarten u.dgl. Ausweiskarten verwendet. Solche Karten müssen weitgehend gegen ein Auftrennen des Kartenverbunds in die einzelnen Schichten, auf denen personenbezogene Daten und im allgemeinen ein Lichtbild des Karteninhabers aufgebracht sind, geschützt werden, um Verfälschungen durch teilweise Änderungen der personenbezogenen Daten zu verhindern.

Bekannte identifikationskarten werden als verschmolzener Verbund hergestellt, bei dem eine die Informationen tragender Kartenkern durch transparente Folien geschützt wird, die eine andere Beschaffenheit als der Kartenkern besitzen.

Die eingangs beschriebene Karte ist aus der US—A 3,614,839 bekannt, die eine drei- oder mehrschichtige Identifikationskarte beschreibt, die in ein Täschchen eingeschoben wird, dessen Seiten verschweißt werden, wobei gleichzeitig die Identifikationskarte mit dem Täschchen fest verbunden wird. Die Vorderseite des Täschchens bildet die vordere Abdeckschicht und besteht aus Polyvinylchlorid, wahrend die Rückseite des Täschchens als hintere Abdeckschicht gleichfalls aus Polyvinylchlorid besteht, um eine gute Verschweißbarkeit mit der Vorderseite zu gewährleisten.

Aus der FR—A—1 347 240 ist ein Schichtaufbau eines Papiers bekannt, bei dem zwischen Schichten aus Fibermaterialien gefärbte Fasern, grobmaschige Stoffgewebe oder geometrische Figuren aus sonstigen Materialien eingefügt werden, die dann eine Art von Zwischenschicht bilden. Diese Zwischenschicht ist bei den jeweiligen Kaschierbedingungen nicht formbeständig und stellt daher keine Stützschicht dar.

Die DE—A—2 308 876 beschreibt eine Identifikationskarte aus relativ dicker Trägerfolie und einer dünnen Klarsichtfolie, zwischen denen sich ein Spezialpapier mit der Fälschungssicherung dienenden, Dickenunterschiede des Papiers hervorrufenden Einlagerungen, wie Wasserzeichen, Banknoten-Druck oder dgl. befindet, wobei die drei schichten so miteinander plastifiziert sind, daß die Einlagerungen durch die Klarsichtfolie hindurch manuell, mechanisch, und/oder visuell feststellbar sind. Weitere, der Identifizierung des Karteninhabers dienende Merkmale sind bei dieser bekannten Identifikationskarte an geeigneter Stelle vorgesehen. Beim Plastifizieren wird beispielsweise eine Fotografie in Form eines Filmdiapositivs zwischen dem Spezialpapier und der Trägerfolie eingebracht und fest mit dem Spezialpapier verbunden. Ebenso kann an einer beliebigen Stelle der Vorder- oder Rückseite der Identifikationskarte ein sicherungstechnisch bedruckter Spezialpapierstreifen außen auf dem Plastikmaterial als Feld für nachträgliche Unterschriften oder sonstige handschriftliche Eintragungen aufkaschiert werden.

Aus der DE—AS 21 63 943 ist eine Personenidentifikationskarte bekannt, die eine Kombination eines Schichtträgers, einer elektrisch leitenden Schicht, einer Sperrschicht, einer fotoleitfähigen Schicht mit einem organischen Fotoleiter — gegebenfalls eine Abdeckschicht —, einer Schutzschicht auf der fotoleitfähigen Schicht oder auf der Abdeckschicht, einer Schutzschicht auf der Rückseite des Schichtträgers und gegebenfalls einer Abdeckschicht auf der letztgenannten Schutzschicht umfaßt. Bei dieser Personenidentifikationskarte wird eine Anzahl von unterschiedlichen Materialien zu einem Verbund zusammengefügt, der wegen der fehlenden Homogenität der einzelnen Schichten auflösbar ist, so daß fälschungen vorgenommen werden können.

Es liegt auf der Hand, daß der größte Schutz gegen Fälschungen durch eine Kombination verschiedenartiger Sicherungsmerkmale und durch eine Karte aus einem Verbund von Schichten erzielt wird, die dem Versuch eines Auftrennens in einzelne Schichten und somit Fälschungseingriffen an den auf den Schichten angebrachten Informationen und Sicherungsmerkmalen widerstehen. Hierzu wird in der europäischen Patentanmeldung 79 103 186, die unter Artikel 54, Absatz 3, EPÜ fällt, vorgeschlagen, daß eine zusammengesetzter Kartenkern und eine obere und untere Abdeckschicht aus thermisch zu einem Verbund verschmelzbaren Polymeren bestehen.

Die Schichten derartiger Identifikationskarten verbinden sich beim Kaschieren bei relativ hohen Temperaturen und Drücken und dabei tritt das Problem auf, daß die Laminate infolge der hohen Temperaturen in nicht tolerierbarer Weise zerfließen können, wodurch die informationen bzw. Daten der Karte nicht mehr lesbar sind.

Aufgabe der Erfindung ist es, eine Identifikationskarte aus einem Verbund mehrerer Schichten zu schaffen, bei denen ein Zerfließen der einzelnen Laminate bzw. Schichten während des Kaschierens vermieden wird und die nach dem Kaschieren weitgehend untrennbar sind.

Die Aufgabe wird erfindungsgemäß dadurch gelöst, daß die Kerschichten des Kartenkerns ebenso wie die Abdeckschichten aus einem verschmelzbaren Polymer auf der Basis von Polyvinylchlorid bestehen, daß die Kartenschichten eine perforierte, poröse oder/und durchlöcherte Stützschicht aus einem bei den jeweiligen Kaschierbedingungen formstabilen Material einschließen, in deren Randzone der perforierte Flächenanteil größer als in der Mittelzone ist und daß das Material der Kernschichten die Perforationen ausfüllt und durch diese hindurch eine feste Verbindung zwischen dem zu beiden Seiten der Stützschicht befindlichen Material der Kernschichten herstellt.

In Ausgestaltung der Erfindung sind in der Stützschicht Löcher mit Durchmessern von 0,5 bis 2 mm vorhanden und ist in der von der Randzone eingeschlossenen Mittelzone der mittlere Abstand der Mittelpunkte zweier benachbarter Löcher gleich dem dreifachen Mittelwert der Radien der Löcher. Des weiteres ist es möglich, daß die Löcher in der Stützschicht in Gestalt eines Hoheitszeichens, eines Wappenzeichens oder eines Zufallsmusters angeordnet sind und somit ein sicherungsmerkmal bilden.

Zweckmäßigerweise ist die Stützschicht entlang den Kanten perforiert wobei die Perforationen nahezu ohne Abstand aneinander anschließen.

Die Herstellung der Identifikationskarte erfolgt in der Weise, daß die Kaschierung der die Stützschicht einschliessenden Kernschichten mit den Abdeckschichten bei einer Temperatur von 160°C und darüber und bei Verpressungsdrücken von 20 bar (kp/cm²) und größer erfolgt, insbesondere betragen die Temperatur 180°C und der Verpressungsdruck 40 bar während des Kaschierens.

Im folgenden wird ein Ausführungsbeispiel der Erfindung unter Bezugnahme auf die Zeichnung näher erläutert.

Es zeigen:

Fig. 1 eine Schnittansicht einer Identifikationskarte aus einer Kernschicht mit aufaschierten Abdeckschichten, und

Fig. 2 in Explosionsdarstellung die identifikationskarte nach Fig. 1 vor dem Kaschiervorgang.

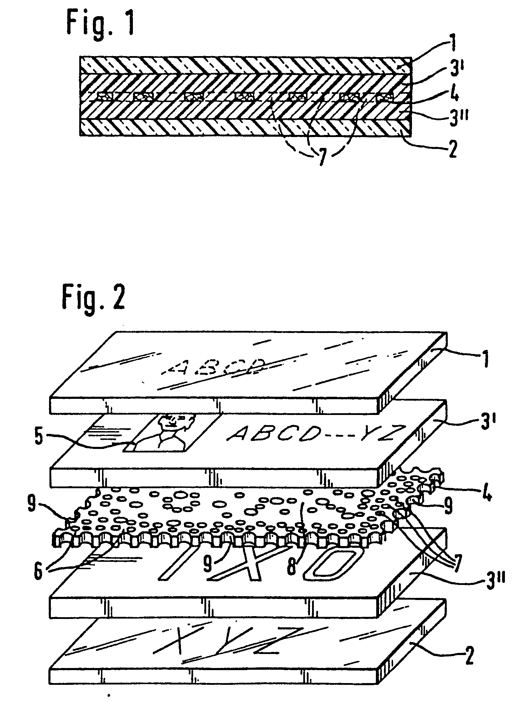

Eine Schnittansicht der Identifikationskarte ist in Fig. 1 dargestellt. Der Kartenkern besteht aus den Kernschichten 3' und 3" und ist auf beiden Seiten mit Abdeckschichten 1 und 2 aus transparenten Folien kaschiert. Sowohl die Kernschichten 3' und 3" als auch die Abdeckschichten 1 und 2 bestehen aus material auf der Basis von Polyvinylchloriden. Zwischen den beiden Kernschichten 3' und 3" ist eine Stützschicht 4 eingebracht, die aus einem bei den jeweiligen Kaschierbedingungen formstabilen Material besteht. Die Stützschicht 4 ist für das verschmelzbare Material der Kernschichten 3' und 3" durchlässig, da sie perforiert, porös oder/und durchlöchert ist. Die in der Stützschicht 4 vorhandenen Löcher 7 weisen im allgemeinen unterschiedliche Durchmesser auf.

Wie aus Fig. 2 ersichtlich ist, ist die obere Kernschicht 3' mit einem Sicherheitsmerkmal 5, im vorliegenden Fall ein Lichtbild des Karteninhabers, versehen, neben welchem Informationen aufgedruckt sind, die durch die Großbuchstaben A, B, C, D, ... Y, Z angedeutet sind. Die Oberfläche der Kernschicht 3' kann mittels Techniken entsprechend dem elektrofotografischen Kopierverfahren mit Hilfe von Fotoleiterschichten oder elektrografischen Kopierverfahren mit Hilfe von Schreibelektroden bedruckt werden, bei denen jeweils Tonerbilder erzeugt werden, die bei elektrofotografischen Kopierverfahren auf die Kernschicht 3' übertragen werden oder bei elektrografischen Verfahren mittels der Schreibelektroden und nachfolgender Betonerung direkt auf der Kernschicht 3' erzeugt werden.

Die Direkt lesbaren Informationen der Kernschicht 3' können gegebenenfalls über einem Sicherheitsdruck, den die Kernschicht 3' trägt, aufgebracht sein. Ein derartiger Sicherheitsdruck ist in der unteren Kernschicht 3" vorhanden und durch die Buchstaben I, X und O angedeutet.

Bei der Verpressung der Kernschichten 3' und 3" mit den Abdeckschichten 1 und 2 besteht infolge der hohen Temperaturen bis zu 180°C und der großen Verpressungsdrücke im Bereich zwischen 40 und 60 bar, die Gefahr, daß die Karten bzw. die laminate während des Kaschierens zerfließen und dadurch die Informationen verwaschen werden, so daß die Identifikationskarte als solche unbrauchbar wird. Dieser Gefahr beugt die Stützschicht 4 vor, da das Material der Kernschichten 3' und 3" die Perforationen bzw. Löcher 7 der Stützschicht 4 während des Kaschierens ausfüllt und durch diese hindurch eine feste Verbindung zwischen dem zu beiden Seiten der Stützschicht 4 befindlichen Material der Kernschichten herstellt.

Die Kaschierung der die Stützschicht 4 einschließenden Kernschichten 3' und 3" mit den Abdeckschichten 1 und 2 erfolgt bevorzugt bei einer Temperatur von 160°C und darüber und bei Verpressungsdrücken von 20 bar und größer, insbesondere bei einer Temperatur von 180°C und einem Verpressungsdruck von 40 bar. Es Zeigt sich nämlich beim Kaschieren, daß mit steigenden Temperaturen und mit steigendem Verpressungsdruck die Trennbarkeit des Kartenverbunds ständig kleiner wird. Die Stätzschicht 4 besteht beispielsweise aus Papier, aus gelochten Polyester-Folien oder aus feinen Geweben, wie sie für Siebdrucke benutzt werden. Die Löcher 7 in der Stützschicht 4 können Durchmesser aufweisen, die von Bruchteilen eines Millimeters bis zu einigen Miilimetern betragen. Gute Ergebnisse werden mit einer Stützschicht 4 aus Papier erhalten, die mit Löchern 7 von 2 mm Durchmesser perforiert ist. Beispielsweise wurde eine Identifikationskarte mit den Abmessungen 125 mm × 90 mm trennfest und verzerrungs-

5       **0013418**       6

frei hergestellt, die folgenden Kartenaufbau besitzt:

Die obere Abdeckschicht 1 ist eine transparente Polyvinylchlorid-Folie von 120 μm Dicke, die Kernschicht 3' besteht aus einer bedruckten matt-weißen Polyvinylchlorid-Folie von 150 μm Dicke, die Stützschicht 4 ist Papier mit Löchern von 2 mm Durchmesser und einem Abstand der Mittelpunkte benachbarter Löcher von etwa 3 mm und besitzt eine Dicke von 150 μm, die zweite Kernschicht 3" ist wieder eine mattweiße Polyvinylchlorid-Folie von 140 μm Dicke und die untere Abdeckschicht 2 ist wiederum eine transparente Polyvinylchlorid-Folie von 120 μm Dicke. Die Kaschierung zu einem trennfesten Kartenverbund erfolgt bei 160°C und rund 30 bar Verpressungsdruck während einer Zeitspanne von 5 min. bei einer Temperatur von 180°C und einem Verpressungsdruck von etwa 40 bar traten in den Zwischenlagen noch keine Verzerrungen auf.

Der offene Anteil der Stützschicht 4 soll möglichst groß sein. Die Löcher 7 der Stützschicht 4 haben bevorzugt Durchmesser von 0,5 bis 2 mm, wobei in der Mittelzone der mittlere Abstand der Mittelpunkte Zweier benachbarter Löcher gleich dem dreifachen Wert der Radien der Löcher ist, falls diese gleichgroß sind. Sind die Durchmesser benachbarter Löcher unterschiedlich groß, so soll der mittlere Abstand der Mittelpunkte gleich dem Dreifachen Mittelwert der radien der beiden Löcher sein.

Die Anordnung der Löcher kann so gewählt werden, daß sie selbst ein Sicherheitsmerkmal darstellt, beispielsweise kann die Lochverteilung ein Zufallsmuster mit unregelmäßigen Abständen und Radien sein, die nur dem Hersteller der Identifikationskarten bekannt ist, so daß nu dieser die Möglichkeit der exakten Reproduzierbarkeit besitzt. Die Lochverteilung kann aber auch in bestimmter geometrischer Anordnung, beispielsweise in Gestalt eines Wappens, eines Hoheitszeichens oder eines Siegels erfolgen. Zur vergrößerung der Fälschungssicherheit kann das Material für die Sicherheitspapiere mit Sicherheitsdrucken und/oder wasserzeichen verwendet werden. Wie Sicherheitspapiere mit Sicherheitsdrucken und/oder wasserziechen verwendet werden. Wie aus Fig. 2 ersichtlich ist, ist der gelochte Flächenanteil der Stützschicht 4 in der Randzone 6 größer als in der Mittelzone 8. Entlang den Kanten 9 der Stützschicht ist diese besonders stark perforiert, so daß die Stützschicht 4 entlang den Außenkanten der Identifikationskarte keinen Ansatzpunkt zum Auflösen des Kartenverbunds gibt.

Da die Abdeckschichten 1 und 2 kopiertechnisch bebildert werden können oder gut bedruckbar sind, können sie an ihren Innenseiten, die den Kernschichten 3' bzw. 3" zugewandt sind, mit Informationen und Sicherungsmerkmalen versehen werden.

In die Identifikationskarte können auch andere bekannte Sicherungsmerkmale eingebaut werden, wie beispielsweise Hologramme, spezielle innere Sicherheitsdrucke und verschlüsselte, personenbezogene Angaben.

Nicht nur die personenbezogenen Daten sondern auch das Lichtbild des Karteninhabers können elektrofotografisch oder elektrografisch als Tonerbilder aufgebracht werden.

**Patentansprüche**

1. Identifikationskarte aus zumindest einer äußeren transparenten thermoplastischen Abdeckschicht auf der Basis von Polyvinylchlorid und einem thermoplastischen Kartenkern, mit der Identifizierung des Karteninhabers dienenden Informationen an geeigneter Stelle auf einer oder mehreren Schichten und mit zusätzlichen Sicherungsmerkmalen, wie Guilloche-Figuren, gegen Fälschungen, dadurch gekennzeichnet, daß die Kernschichten (3', 3") des Kartenkerns ebenso wie die Abdeckschichten (1, 2) aus einem verschmelzbaren Polymer auf der Basis von Polyvinylchlorid bestehen, daß die Kernschichten (3', 3") eine perforierte, poröse oder/und durchlöcherte Stützschicht (4) aus einem bei den jeweiligen Kaschierbedingungen formstabilen Material einschließen, in deren Randzone (6) der perforierte Flächenanteil größer als in der Mittelzone ist und daß das Material der Kernschichten (3', 3") die Perforationen ausfüllt und durch diese hindurch eine feste verbindung zwischen dem zu beiden Seiten der Stützschicht (4) befindlichen Material der Kernschichten (3', 3") herstellt.

2. Identifkationskarte nach Anspruch 1, dadurch gekennzeichnet, daß die poröse Stützschicht (4) für das verschmelzbare Material der Kernschichten (3', 3") durchlässig ist.

3. Identifikationskarte nach den Ansprüchen 1 und 2, dadurch gekennzeichnet, daß in der Stützschicht (4) Löcher (7) mit Durchmessern von 0,5 bis 2 mm vorhanden sind und daß in der von der Randzone eingeschlossenen Mittelzone der mittlere Abstand der Mittelpunkte zweier benachbarter Löcher gleich dem dreifachen Mittelwert der Radien der Löcher ist.

4. Identifkationskarte nach Anspruch 4, dadurch gekennzeichnet, daß die Löcher (7) in der Stützschicht (4) in Gestalt eines Hoheitszeichens, eines Wappenzeichens oder eines Zufallsmusters angeordnet sind une ein Sicherungsmerkmal bilden.

5. Identifkationskarte nach Anspruch 5, dadurch gekennzeichnet, daß die Stützschicht (4) aus Papier besteht, das mit Löchern (7) von 2 mm Durchmesser perforiert ist.

6. Identifkationskarte nach den Ansprüchen 1 bis 5, dadurch gekennzeichnet, daß die Stützschicht (4) entlang den Kanten (9) perforiert ist.

7. Verfahren zur Herstellung einer Identifikationskarte nach den Ansprüchen 1 bis 8, dadurch gekennzeichnet, daß die Kaschierung der die Stützschicht (4) einschließenden Kernschichten (3', 3") mit den Abdeckschichten (1, 2) bei einer Temperatur von 160°C und darüber und bei Verpressungsdrücken von 20 bar (kp/cm²) und größer erfolgt.

8. Verfahren nach Anspruch 9, dadurch gekennzeichnet, daß die Temperatur 180°C und der Verpressungsdruck 40 bar (kp/cm²) während des Kaschierens betragen.

## Revendications

1. Carte d'identification, constituée au moins d'une couche de recouvrement extérieure, transparente, en matériau thermoplastique à base de polychlorure de vinyle, et d'une âme thermoplastique qui, pour permettre d'identifier le titulaire de la carte, porte sur une ou plusieurs couches, et aux endroits appropriés, les informations spécifiques ainsi que des marques de sécurité supplémentaires, telles que des figures quillochées empêchant la falsification, caractérisée en ce que les couches (3' et 3") de l'âme de la carte, ainsi que les couches de recouvrement (1 et 2) sont réalisées dans un polymère fusible à base de polychlorure de vinyle, en ce que les couches (3' et 3") de l'âme renferment une couche de renforcement (4) perforée, poreuse et/ou garnie de trous, qui est réalisée en un matériau connu pour sa stabilité dimensionnelle et résistant aux conditions de la stratification, et dont les perforations sont plus importantes dans la zone périphérique (6) que dans la zone centrale (8), et en ce que le matériau des couches (3' et 3") de l'âme remplit les perforations et réalise, à travers celles-ci, une liaison résistante avec le matériau des couches (3' et 3") de l'âme placées de part et d'autre de cette couche de renforcement (4).

2. Carte d'identification selon la revendication 1, caractérisée en ce que la couche de renforcement poreuse (4) est perméable au matériau fusible des couches (3' et 3") de l'âme.

3. Carte d'identification selon les revendications 1 et 2, caractérisée en ce que la couche de renforcement (4) est garnie de trous (7) dont le diamètre varie entre 0,5 et 2 mm, et en ce que, dans la zone centrale encadrée par la zone périphérique, l'intervalle moyen entre les centres de deux trous voisins est égal au triple de la valeur moyenne des rayons de ces trous.

4. Carte d'identification selon la revendication 3, caractérisée en ce que les trous (7) garnissant la couche de renforcement (4) sont disposés de manière à former soit un emblème national ou administratif, soit un emblème héraldique, soit un sigle ou un emblème approprié quelconque, constituant une marque de sécurité.

5. Carte d'identification selon la revendication 4, caractérisée en ce que la couche de renforcement (4) est une feuille de papier garnie de trous (7) d'un diamètre de 2 mm.

6. Carte d'identification selon les revendications 1 à 5, caractérisée en ce que la couche de renforcement (4) est perforée le long des arêtes (9).

7. Procédé pour la fabrication d'une carte d'identification selon les revendications 1 à 6, caractérisé en ce que l'on marie, par un procédé de stratification, les couches de recouvrement (1 et 2) avec les couches (3' et 3") de l'âme encadrant la couche de renforcement (4), à une température égale ou supérieure à 160°C et sous une pression d'application égale ou supérieure à 20 bars.

8. Procédé selon la revendication 7, caractérisé en ce que, pour la stratification, la température atteint 180°C, et la pression d'application 40 bars.

## Claims

1. Identity card comprising at least one outer transparent thermoplastic cover layer based on polyvinyl chloride and a thermoplastic card core, containing, at a suitable point on one or several layers, information which serves for the identification of the card holder and additional security markings, such as guilloche figures, as a protection against forgeries, wherein the core layers (3', 3") of the card core and the cover layers (1, 2) thereof are comprised of a fusible polymer based on polyvinyl chloride, wherein the core layers (3', 3") enclose a support layer (4) which is perforated, porous or/and provided with holes and is comprised of a material which is dimensionally stable under the laminating conditions in each case, the perforated portion of the area of the support layer is larger in its marginal zone (6) than in the central zone and wherein the material of the core layers (3', 3") fills the holes and produces a firm bond, through the holes, between the material of the core layers (3', 3") which is present on either side of the support layer (4).

2. Identity card as claimed in claim 1, wherein the porous support layer (4) is permeable to the fusible material of the core layers (3', 3").

3. Identity card as claimed in claims 1 and 2, wherein the support layer (4) is provided with holes (7) having diameters ranging from 0,5 to 2 mm and wherein within the central zone enclosed from the marginal zone the average distance between the centers of two neighbouring holes is equal to threetimes the mean value of the radii of the holes.

4. Identity card as claimed in claim 3, wherein the holes (7) in the support layer (4) are arranged so as to form a national emblem, a heraldic figure or a random pattern and constitute a security marking.

5. Identity card as claimed in claim 4, wherein the support layer (4) is comprised of paper which is perforated with holes (7) having diameters of 2 mm.

6. Identity card as claimed in any of claims 1 to 5, wherein the support layer (4) is perforated along the edges (9) thereof.

7. Method of manufacturing an identity card as claimed in claims 1 to 6, wherein the core layers (3', 3") enclosing the support layer (4) are laminated to the cover layers (1, 2) at a temperature of 160°C and above and at bonding pressures of 20 bars (kp/cm²) and above.

8. Method as claimed in claim 7, wherein the temperature is 180°C and the bonding pressure if 40 bars (kp/cm²) during lamination.

0013418

## Fig. 1

## Fig. 2